# EUROPÄISCHE PATENTANMELDUNG

(11) **EP 0 741 184 A1**
(43) Veröffentlichungstag der Anmeldung: **06.11.1996**
(21) Anmeldenummer: 96104837.8
(22) Anmeldetag: 27.03.1996
(51) Int. Cl.: C11D 3/12, C11D 11/00, B01J 2/28

(54) **Zeolithgranulat, Verfahren zu seiner Herstellung und Verwendung**

(30) Priorität: 26.04.1995 DE 19515256
(71) Anmelder: Degussa Aktiengesellschaft, 60311 Frankfurt (DE)
(72) Erfinder: Dörr, Jürgen, Dr., 50321 Brühl (DE); Meon, Walter, Dr., 63571 Gelnhausen (DE); Barthel, Thomas, 63457 Hanau (DE); Lortz, Beata-Maria, Dr., 63607 Wächtersbach (DE); Menzel, Jürgen, Dr., 53117 Bonn (DE); Stein, Gerd, 53639 Königswinter (DE); Stein, Günter, 61130 Nidderau 4 (DE)

(57) **Zusammenfassung**

Zeolithgranulate, gekennzeichnet durch eine abgerundete Form, insbesondere Kugelform,

| | |
|---|---|
| Durchmesser: | 0,3 bis 1,6 mm |
| Zusammensetzung: | 69 ± 4 Gew.-% Zeolith A |
| | 10 ± 1,0 Gew.-% Polymer |
| | 17 - 25 Gew.-% Wasser |

werden hergestellt, indem man pulverförmigen Zeolith NaA mit Polymerlösung und Wasser derart vermischt, daß ein Wassergehalt von 35 bis 36 Gew.-% eingestellt wird, die Mischung granuliert und anschließend trocknet.

Die Zeolithgranulate können zur Herstellung von Waschmitteln und als Wasserenthärter eingesetzt werden.

## Beschreibung

Die Erfindung betrifft Zeolithgranulate, ein Verfahren zu ihrer Herstellung und ihre Verwendung zur Herstellung von Waschmitteln und Wasserenthärtern.

Neuere Waschmittelentwicklungen zielen auf kompakte Waschmittelpulver, die ein möglichst hohes Schüttgewicht aufweisen sollen, um den Lager- und Transportraum besser ausnutzen und um Verpackungsmaterial einsparen zu können. Eine Voraussetzung zur Herstellung dieser sogenannten Kompaktwaschmittel ist es, den als Builder eingesetzten Zeolith A in einer Form, die ein Entmischen des Waschmittels während des Transportes verhindert, der Waschmittelmischung zuzuführen. Dies geschieht in From von Zeolithgranulaten mit einem möglichst hohen Schüttgewicht.

Es ist bekannt, Zeolithgranulate mit einem Schüttgewicht von 780 bis 980 g/l herzustellen, indem man Zeolithpulver des Typs A mit einer Granulierflüssigkeit, bestehend aus Wasser, Tensiden und (co-)polymeren Carboxylaten, in einem Mischgranulator granuliert. Die bekannten Zeolithgranulate weisen die Zusammensetzung: 70 bis 92 Gew.% Zeolith, 2 bis 12 Gew.-% Natriumsalz polymerer, beziehungsweise copolymerer Carbonsäuren und 4 bis 20 Gew.-% flüssige Tenside auf (DE-A 40 38 609).

Durch den hohen Anteil an Tensiden sind die bekannten Zeolithgranulate in ihrer Verwendbarkeit bei der Herstellung, beziehungsweise der Rezepturgestaltung von Waschmitteln eingeschränkt. So wirkt sich der hohe Gehalt an Tensiden nachteilig auf das Adsorptionsvermögen für Flüssigkeiten, wie zusätzliche Tenside oder Wasser, aus. Die bekannten Zeolithgranulate können nur maximal 20 Gew.-% einer Flüssigkeit, ohne die gute Rieselfähigkeit zu verlieren, aufnehmen.

Die bekannten Zeolithgranulate können nachteiligerweise auch nicht als Wasserenthärter eingesetzt werden.

Es ist bekannt, Zeolithgranulate in einem Pflugscharmischer unter Aufsprühen einer Mischung aus Wasser und Salzen polymerer beziehungsweise copolymerer Carbonsäuren herzustellen (DE-A 38 38 086). Diese bekannten Zeolithgranulate weisen eine ungleichmäßige und kantige Kornform auf. Dementsprechend besitzen sie eine unzureichende Fließfähigkkeit (entsprechend einer Durchflußrate von 150 ml/s).

Es ist bekannt, Zeolithgranulate durch Sprühtrocknung einer Mischung, bestehend aus Wasser, Zeolith A und Salzen von Polycarbonsäuren herzustellen (DE-A 33 16 513). Das bekannte Zeolithgranulat hat den Nachteil, daß es nur ein Schüttgut von 560 bis 610 g/l aufweist. Weiterhin weisen die bekannten Zeolithgranulate eine mittlere Teilchengröße d₅₀ von nur 200 µm auf.

In der Waschmittelindustrie werden neuerdings Waschmittel in Form von kleinen Kugeln (Megaperls), die ein sehr hohes Schüttgewicht von bis zu 1000 g/l aufweisen, hergestellt und auf den Markt gebracht.

Aufgrund des deutlich niedrigeren Schüttgewichts und vor allem aufgrund der unregelmäßigen Form und Gestalt neigen die bekannten Zeolithgranulate zum Entmischen, wenn sie gemeinsam mit den Waschmittelkugeln verpackt und transportiert werden. Bei der Anwendung dieser zum Teil entmischten Waschmittel entstehen unerwünschte Dosierfehler.

Es besteht somit die Aufgabe, Zeolithgranulate, welche ein hohes Schüttgewicht aufweisen und gemeinsam mit kugelförmigen Waschmittelzusammensetzungen eingesetzt werden können, herzustellen.

Gegenstand der Erfindung sind Zeolithgranulate, welche gekennzeichnet sind durch eine abgerundete Form, insbesondere

Kugelform

| | |
|---|---|
| Durchmesser: | 0,3 bis 1,6 mm |
| Zusammensetzung: | 69 ± 4 Gew.-% Zeolith A |
| | 10 ± 1,0 Gew.-% Polymer |
| | 17 - 25 Gew.-% Wasser |

In einer bevorzugten Ausführungsform der Erfindung können die Zeolithgranulate weiterhin einen oder mehrere der folgenden Parameter aufweisen:

| | |
|---|---|
| Durchfließrate [ml/s] | > 155, vorzugsweise 160 bis 180 |
| Schüttdichte [g/l] | 700 bis 1000, vorzugsweise 800 bis 850 |
| Siebanalyse d50 [µm] | 500 bis 1100 |
| Siebanalyse < 100 µm [%] | 0 |
| Siebanalyse > 1600 µm [%] | < 2 |
| Reflexionswert R 46 [%] | ≧ 90 |
| Calziumbindevermögen [mg CaO/g] | > 130 |
| Weißgrad nach Berger | > 80 |
| pH-Wert | 10 bis 11 |
| Redispergierbarkeit > 56 µm [%] | < 10 |

Die aufgeführten Parameter werden mittels der folgenden Methoden bestimmt:

### Durchfließrate

Ein Volumen von 300 ml des Zeolithgranulates fließt durch eine vertikal angebrachte Glasröhre mit einem Volumen von 240 ml. Die für den Durchfluß benötigte Zeit wird bestimmt.

### Schüttdichte

Die Schüttdichte wird in Anlehnung an DIN ISO 697 bestimmt.

### Siebanalyse

Die Siebanalyse wird in Anlehnung an DIN 66 165 bestimmt.

### Reflexionswert R 46

Der Reflexionswert R 46 (bei 457 nm) wird gegenüber dem Weißstandard DIN 5033-WS Bariumsulfat bestimmt. Der Reflexionswert wird in % angegeben.

### Calciumbindevermögen

Das Calciumbindevermögen wird durch Titration der Resthärte mittels komplexiometrische Titration bestimmt.

### Redispergierbarkeit

Zur Bestimmung der Redispergierbarkeit wird eine Probe des Zeolithgranulates in Wasser gelöst und der über ein Bronzesieb abfiltrierte Rückstand in Relation zur Einwaage gesetzt.

Ein weiterer Gegenstand der Erfindung ist ein Verfahren zur Herstellung der Zeolithgranulate mit abgerundeter Form, insbesondere Kugelform, welches dadurch gekennzeichnet ist, daß man in einem Mischer eine Menge an pulverförmigem Zeolith des Typs NaA einwiegt, eine Menge an Polymerlösung und eine Menge an Wasser hinzugibt und derart vermischt, daß in der erhaltenen Mischung ein Wassergehalt von 35 bis 36 Gew.-% eingestellt ist, die erhaltene Mischung mittels einer Dosiervorrichtung (zum Beispiel Dosierschnecke) einer Pelletiervorrichtung zuführt, zu Granulaten mit abgerundeter Form, insbesondere Kugelform, pelletiert, die erhaltenen Granulate anschließend über eine Siebvorrichtung einer Trocknungsvorrichtung zuführt und das Granulat auf einen Wassergehalt von 17 ± 25 Gew.-% trocknet.

Der Wassergehalt der Mischung kann durch verschiedene Maßnahmen eingestellt werden, wobei sich der Gesamtwassergehalt der Mischung aus dem Wassergehalt des eingesetzten Zeolithen A, dem Wasseranteil der eingesetzten Polymerlösung und dem zusätzlich eingebrachten Wasser zusammensetzen kann. Dabei kann es notwendig sein, daß die Zusammensetzung Polymerlösung / zusätzliches Wasser in der Mischung für den jeweiligen Granulieransatz entsprechend dem Wassergehalt des eingesetzten Zeolithen und der eingesetzten Polymerlösung neu berechnet werden muß.

Als Mischer können zum Beispiel Konusmischer, Schnecken- oder Pflugscharmischer oder Mischgranulatoren mit Aufdüseinrichtung eingesetzt werden.

Als Polymer kann zum Beispiel das Natriumsalz einer modifizierten Polyacrylsäure eingesetzt werden.

Als Dosiervorrichtung kann zum Beispiel eine Dosierschnecke eingesetzt werden.

Als Pelletriervorrichtung kann zum Beispiel ein Pelletrierteller, Granulierteller oder eine Dragiertrommel eingesetzt werden.

Als Siebvorrichtung kann zum Beispiel eine Siebtrommel eingesetzt werden.

Als Trocknungsvorrichtung kann zum Beispiel ein Fließbetttrockner eingesetzt werden.

In einer bevorzugten Ausführungsform der Erfindung wird ein pulverförmiger Zeolith des Typs A mit besonders definiertem Teilchenspektrum eingesetzt. Derartige Zeolithpulver können gemäß DE-AS 24 47 021, DE-AS 25 17 218, DE-OS 26 52 419, DE-OS 26 51 420, DE-OS 26 51 436, DE-OS 26 51 437, DE-OS 26 51 445 oder DE-OS 26 51 485 hergestellt werden. Sie weisen dann die dort angegebenen Teilchenverteilungskurven auf.

In einer besonders bevorzugten Ausführungsform kann ein pulverförmiger Zeolith des Typs A verwendet werden, der die in der DE-OS 26 51 485 beschriebene Teilchengrößenverteilung aufweist.

Als Natriumsalze polymerer bzw. copolymerer Carbonsäuren können Homopolymerisate auf Basis von Acrylsäure, Copolymere auf Basis der Comonomeren, wie Acrylsäure und Maleinsäure mit Methylvinylsäure, oder Copolymere auf Basis von Acrylsäure und Acrolein verwendet werden.

Beispiele für die in den Granulaten enthaltenen homopolymeren und/oder copolymeren Carbonsäuren, vorliegend als wasserlösliche Salze, von denen die Natriumsalze bevorzugt werden, sind Polyacrylsäure, Polymethacrylsäure und Polymaleinsäure, Copolymere der Acrylsäure mit Methacrylsäure oder Maleinsäure mit Vinylethern, wie Vinylmethylether bzw. Vinylethylether, ferner mit Vinylestern, wie Vinylacetat oder Vinylpropionat, Acrylamid, Methacrylamid sowie mit Ethylen, Propylen oder Styrol. In solchen copolymeren Säuren, in denen eine der Komponenten keine Säurefunktion aufweist, beträgt deren Anteil im Interesse einer ausreichenden Wasserlöslichkeit nicht mehr als 50 Molprozent, vorzugsweise weniger als 30 Molprozent. Als besonders geeignet haben sich Copolymere der Acrylsäure bzw. Methacrylsäure mit Maleinsäure erwiesen, wie sie beispielsweise in EP 25 551 B1 näher charakterisiert sind. Es handelt sich dabei um Copolymerisate, die 50 bis 90 Gew.-% Acrylsäure bzw. Methacrylsäure und 50 bis 10 Gew.-% Maleinsäure enthalten. Besonders bevorzugt sind solche Copolymere, in denen 45 bis 85 Gew.-% Acrylsäure und 55 bis 15 Gew.-% Maleinsäure anwesend sind. Das Molekulargewicht der homo- bzw. copolymeren Polycarboxylate beträgt im allgemeinen 2.000 bis 150.000, vorzugsweise 5.000 bis 100.000.

Handelsübliche Salze (co-)polymerer Carbonsäuren in pulvriger Form enthalten vielfach Feuchtigkeitsanteile von 5 bis 15 Gew.-%. Dieser Wasseranteil wird in die Berechnung der Wasserbilanz eingebracht, bzw. die in die Granulierstufe eingebrachte Wassermenge kann um diesen Anteil reduziert werden. Rechnerisch ist der Anteil der Salze bei der Herstellung der Mittel bzw. bei der Zusammensetzung der fertigen Granulate auf wasserfreies Salz zu beziehen.

Die erfindungsgemäßen Zeolithgranulate können vorteilhafterweise zur Herstellung von Waschmitteln mit hohem Schüttgewicht, insbesondere zur Herstellung von Waschmittel in Form von megaperls, eingesetzt werden. Sie weisen ein hohes Schüttgewicht auf und können in Wasser leicht dispergiert werden, wobei die Agglomeratform leicht aufgelöst werden kann.

Die erfindungsgemäßen Zeolithgranulate können vorteilhaft weiterhin als Wasserenthärter eingesetzt werden. Sie können rückstandsfrei dosiert werden und weisen ein gutes Einspülverhalten beim Waschprozeß auf.

Weiterhin zeigen die erfindungsgemäßen Zeolithgranulate in einem Erweka Friabilator bei einer Einwaage von 50 g auch nach 2 h Beanspruchung mit 20 U/min. kaum meßbaren Abrieb (kleiner 100 µm 0,05 bis 0,01 Gew.-%).

### Beispiele

Als Zeolith A wird ein Zeolithpulver eingesetzt, das gemäß DE-A 26 51 485 hergestellt und sprühgetrocknet wurde.

Die Durchführung der Verfahren erfolgt in einem Konusmischer der Firma Nauta.

Das Polymer Sokalan CP 5 ist das Natriumsalz eines mittelmolekularen Acrylsäurepolymers mit anionischem Charakter, deren mittlere Molmasse ca. 120.000 beträgt.

Das Polymer Degapas 4104 N 40 % ist das Natriumsalz eines Acrylsäurepolymers, gelöst in Wasser.

Die Prozentangaben sind Gew.-%.

### Beispiel 1

Es werden 406 kg Zeolith A mit einer Feuchte von 20 % im Konusmischer vorgelegt. Um in der feuchten Mischung einen Wassergehalt von 35 % zu erzielen, werden in diesen Mischer während ca. 10 min. 113 kg Polymer mit einem Wasseranteil von 60 % und 50 kg zusätzliches Wasser aufgedüst. In weiteren ca. 40 min. Mischzeit wird eine homogene feuchte Mischung erzeugt. Es bilden sich lockere Granulationskeime von 0,3 bis 3 mm. Auf dem Pelettierteller wird ein Kugelgranulat mit einem mittleren Durchmesser d₅₀ von 800 µm erzeugt. Die Drehzahl des Pelletiertellers wird dabei bei einem Durchmesser von 1,5 m je nach optischem Erscheinungsbild des Kugelgranulates zwischen 5 und 7 U/min. variiert. Im nachgeschalteten Trommelsieb werden Kugelgranulate > 2000 µm Durchmesser ausgeschleust, zerkleinert und dem Prozeß im Mischschritt wieder zugeführt. Die Trocknung erfolgt im Fließbett-Trockner bis zu einer Restfeuchte von ca. 25 % einschließlich im Zeolithkristall gebundenem Wassers.

### Beispiel 2

Es werden 423 kg Zeolith A mit einer Feuchte von 20 % im Konusmischer vorgelegt. In der feuchten Mischung wird ein Wassergehalt von 35,5 % eingestellt. Dazu werden 122 kg Polymer mit einem Wasseranteil von 60 % und 57 kg zusätzliches Wasser aufgedüst. Der Pelletierteller wird bei einer Drehzahl von 7 U/min. betrieben.

### Beispiel 3

Bei einer Vorlage von 610 kg Zeolith A mit einer Feuchte von 20 % werden zum Erreichen eines Wassergehaltes von 35 % im Feuchtgranulat 170 kg Polymer mit einem Wasseranteil von 60 % und 75 kg zusätzliches Wasser aufgedüst.

Die physikalisch-chemischen Daten der erhaltenen Zeolithgranulate sind in der Tabelle 1 aufgeführt.

Siebanalyse d50 (um) Beispiel 2 Beispiel 3

**Tabelle 1**

| | **Beispiel 1** | **Beispiel 2** | **Beispiel 3** |
|---|---|---|---|
| | Degapas | Degapas | Sokalan |
| Zeolithgehalt [%] | 71,8 | 71,8 | 69,8 |
| Polymergehalt [%] | 10,8 | 10,8 | 9,7 |
| CaBv [mg CaO/g telq.] | 137 | 135 | 141 |
| Durchflußrate [ml/s] | 172 | 160 | 160 |
| Schüttdichte [g/l] | 759 | 806 | 793 |
| Siebanalyse d₅₀ [µm] | 800 | 1010 | 530 |
| < 100 µm [%] | 0 | 0 | 0 |
| > 800 µm [%] | 50 | 69 | 20 |
| > 1600 µm [%] | 0,4 | 2,2 | 0 |
| Redispergierbarkeit > 56 µm [%] | < 10 | < 5 | < 5 |
| R 46 [%] | 91,5 | 92,6 | 92,3 |
| Weißgrad Berger | 83,9 | 86,2 | 85,5 |
| L | 97,454 | 97,747 | 97,697 |
| a - Werte | 0,095 | 0,098 | 0,045 |
| b | 1,799 | 1,493 | 1,628 |
| pH-Wert | 10,9 | 10,9 | 10,8 |
| Aufnahmekapazität Lutensol AO7 [%] | 18 | 18 | 21 |
| Einspülverhalten ohne Waschmittel, Rückstand nach 30 s [%] | 0 | 0 | 30 - 45 |

## Patentansprüche

1. Zeolithgranulat, gekennzeichnet durch eine abgerundete Form, insbesondere Kugelform,
| | |
|---|---|
| Durchmesser: | 0,3 bis 1,6 mm |
| Zusammensetzung: | 69 ± 4 Gew.-% Zeolith A |
| | 10 ± 1,0 Gew.-% Polymer |
| | 17 - 25 Gew.-% Wasser |

2. Verfahren zur Herstellung der Zeolithgranulate mit abgerundeter Form, insbesondere in Kugelform nach Anspruch 1, dadurch gekennzeichnet, daß man in einem Mischer eine Menge an pulverförmigem Zeolith des Typs NaA einwiegt, eine Menge an Polymerlösung und eine Menge an Wasser hinzugibt und derart vermischt, daß in der erhaltenen Mischung ein Wassergehalt von 35 bis 36 Gew.-% eingestellt ist, die erhaltene Mischung mittels einer Dosiervorrichtung einer Pelletiervorrichtung zuführt, zu kugelförmigen Granulaten mit abgerundeter Form, insbesondere in Kugelform, pelletiert, die erhaltenen Granulate anschließend über eine Siebvorrichtung einer Trocknungsvorrichtung zuführt und das Granulat auf einem Wassergehalt von 17 - 25 Gew.-% trocknet.

3. Verwendung der Zeolithgranulate nach Anspruch 1 zur Herstellung von Waschmitteln.

4. Verwendung der Zeolithgranulate nach Anspruch 1 als Wasserenthärter.
